# FASCICULE DE BREVET EUROPEEN

(11) **EP 2 819 776 B1**
(45) Date de publication et mention de la délivrance du brevet: **13.05.2020**
(21) Numéro de dépôt: 13711584.6
(22) Date de dépôt: 28.02.2013
(51) Int. Cl.: B01J 3/08

(54) **PROCÉDÉ DE FABRICATION DE NANOPARTICULES PAR DÉTONATION**
VERFAHREN ZUR HERSTELLUNG VON NANOPARTIKELN MITTELS DETONATION
METHOD FOR MANUFACTURING NANOPARTICLES BY DETONATION

(30) Priorité: 29.02.2012 FR 1200602
(43) Date de publication de la demande: 07.01.2015
(73) Titulaire: ISL - Institut franco-allemand de recherches de Saint-Louis, 68300 Saint-Louis (FR); Centre National de la Recherche Scientifique (C.N.R.S.), 75016 Paris (FR)
(72) Inventeur: SPITZER, Denis, F-67203 Oberschaeffolsheim (FR); PICHOT, Vincent, F-68200 Mulhouse (FR); RISSE, Benedikt, 79599 Wittlingen (DE)
(74) Mandataire: Lavoix
(86) Numéro de dépôt international: PCT/EP2013/054107
(87) Numéro de publication internationale: WO 2013/127967

(56) Documents cités:
- US-A1- 2010 254 884
- US-B2- 7 862 792
- KUZNETSOV V L ET AL: "Study of ultradispersed diamond powders obtained using explosion energy", CARBON, ELSEVIER, OXFORD, GB, vol. 29, no. 4-5, 1 janvier 1991 (1991-01-01), pages 665-668, XP024032802, ISSN: 0008-6223, DOI: 10.1016/0008-6223(91)90135-6 [extrait le 1991-01-01]
- V. L. KUZNETSOV ET AL.: "Onion-Like carbon from ultra-disperse diamond", CHEMICAL PHYSICS LETTERS, vol. 222, 20 mai 1994 (1994-05-20), pages 343-348, XP002692566,

## Description

La présente invention concerne le domaine de fabrication de nanoparticules, et a plus particulièrement comme objet un procédé de fabrication de nanoparticules de diamant, ou nanodiamants, par détonation d'au moins une charge d'explosif.

Un des défis majeurs de la production de nanodiamants est d'obtenir une production de masse et que la taille des nanodiamants obtenus soit inférieure à 5nm. En effet, les particules de nanodiamants de très faibles tailles intéressent plusieurs domaines comme :
- le domaine médical, notamment à travers l'utilisation de nanoparticules de diamant utilisées comme vecteurs sur lesquelles sont greffées des molécules médicaments pour le traitement de maladie dégénératives. Ce type d'application requiert des quantités importantes de produit, de l'ordre de 100mg par essai. Les nanoparticules de diamant ultra-petites sont très porteuses du fait de leur efficacité à atteindre le cœur d'une cellule et à leurrer le système macrophage de celle-ci en raison de leur petite taille, rendant ainsi le traitement efficace. On insiste ici sur le fait que le nanodiamant est probablement une des seules espèces qui soit biocompatible et ceci sur une longue durée ;
- les précurseurs de plots macroscopiques, de taille latérale microscopique, obtenus par croissance CVD (Chemical Vapor Déposition ou Déposition par Vapeur Chimique). En effet, on utilise des dépôts de nanodiamants de très fortes densités particulaires comme précurseurs de croissance notamment pour la réalisation d'objets divers, plots isolants dont l'utilisation est prévue dans des environnements vivants ou physiologiques, par exemple la régénérescence rétinienne. Là également, plus les particules de départs seront petites, plus denses seront les dépôts précurseurs de croissance et plus fines seront les électrodes obtenues par croissance CVD ;
- les nanoparticules très fines, à l'exemple des nanodiamants, sont très intéressantes en matière de protection optique par leur réponse non linéaire vis à vis de certaines longueurs d'ondes ;
- les nanoparticules de diamant ultrafines pourraient aussi avoir de très fort champs d'application dans le durcissement ou dans l'accès à la multifonctionnalité de certains polymères de type Kevlar ou autres polymères analogues.

Des procédés de production de nanoparticules de diamant existent.

Néanmoins, ces procédés connus ne permettent pas toujours d'obtenir des tailles de particules de nanodiamants inférieures à 5nm.

D'autres procédés connus ne permettent pas de produire de grandes quantités de nanoparticules de diamant en des temps raisonnables. Les procédés connus ont des capacités de production réduites.

Ainsi, on connaît des procédés utilisant un laser ou une flamme d'acétylène permettant d'obtenir des nanoparticules de diamant avec des distributions de tailles inférieures à 5nm. Les documents « The formation of multiply twinning structure and photoluminescence of well-dispersed nanodiamonds produced by pulsed-laser irradiation, Diammond & Related Materials 17 (2008) 142-146 » et « Effect of laser pulse parameters on the size and fluorescence of nanodiamonds formed upon pulsed-laser irradiation, Materials Research Bulletin 45 (2010) 826-829 » décrivent des procédés de fabrication de nanodiamants par laser. Mais ces différentes techniques de fabrication ne permettent pas une production en masse de nanodiamants, leurs capacités de production sont trop faibles (de l'ordre du milligramme).

On connaît également la fabrication de nanodiamants par détonation d'explosif, qui permet une production en masse de nanodiamants (le tir d'une charge explosive classique de 250g produit environ 12g de nanodiamants). Ce procédé est décrit, par exemple, dans les brevets US2010254884, US2010278712 et US2009004092. L'état de la technique actuel de la production par détonation d'explosif utilise des particules explosives de dimension micrométrique et seule une très faible fraction massique des particules de nanodiamant obtenues par ce type de procédé ont une taille inférieure à 5nm.

Il existe un besoin d'un procédé de fabrication de nanoparticules qui apporte des solutions aux problèmes des procédés connus. L'invention concerne un procédé de fabrication de nanoparticules, notamment de nanoparticules de diamant qui apporte des solutions à tout ou partie des problèmes des procédés connus.

Le procédé selon l'invention permet de fabriquer en masse des nanoparticules en un temps réduit.

De plus, le procédé selon l'invention permet de fabriquer en masse des nanoparticules et dont le maximum de nanoparticules produites possède une taille inférieure à 5 nm.

De manière avantageuse, le procédé de l'invention permet de fabriquer des nanoparticules dont l'écart des tailles entre ces nanoparticules est le plus réduit possible afin d'obtenir une taille homogène entre ces nanoparticules.

De manière particulièrement avantageuse, le procédé selon l'invention peut être mis en œuvre à une échelle industrielle.

L'invention fournit un procédé de fabrication de nanoparticules par détonation d'au moins une charge d'explosif pour lequel, ladite au moins une charge d'explosif est nanostructurée.
On entend par terme « nanostructurée », que la charge d'explosif possède une structure de taille nanométrique.

De manière préférée, les nanoparticules obtenues selon le procédé de l'invention sont des nanoparticules de diamant, encore appelés nanodiamants.

De manière également préférée, les nanoparticules obtenues selon le procédé de l'invention sont des nanoparticules d'oxyde de métal.
De manière préférée, l'oxyde de métal est choisi parmi l'oxyde de bore, l'oxyde de fer, l'oxyde de nickel, l'oxyde de chrome, l'oxyde de zirconium, l'oxyde de titane, l'oxyde de silicium, l'oxyde de tungstène, l'oxyde de manganèse, l'oxyde de vanadium, l'oxyde de cuivre, l'oxyde de zinc, l'oxyde de molybdène, l'oxyde de nobium et l'oxyde de nitrium.

De manière également préférée, les nanoparticules obtenues selon le procédé de l'invention ont une taille allant de 1 à 10 nm, de manière avantageuse allant de 1 à 7 nm, de manière plus avantageuse inférieure à 5 nm.

Le procédé selon l'invention met en œuvre la détonation d'au moins une charge d'explosif. La charge explosive est de préférence formée par des particules d'explosif produites selon un procédé de brumisation flash.

Les particules d'explosif sont de préférence obtenues selon un procédé de brumisation-évaporation flash, et plus particulièrement selon le procédé décrit dans la demande internationale PCT/EP2013/052478.
Le procédé décrit dans la demande internationale PCT/EP2013/052478 comprend les étapes successives de :
- préparation d'une solution comprenant au moins un composé organique ou minéral et au moins un solvant ;
- chauffage de la solution, sous une pression allant de 3 à 300 bar, à une température supérieure au point d'ébullition du solvant ou à une température supérieure au point d'ébullition du mélange de solvants ;
- atomisation de la solution dans une chambre d'atomisation au moyen d'au moins un dispositif de dispersion et sous un angle allant de 30 à 150 ° à une pression allant de 0,0001 à 2 bar ;
- séparation du solvant sous forme gazeuse.

De manière préférée, le procédé décrit dans la demande internationale PCT/EP2013/052478 est adapté à la préparation de particules d'explosif.

Les particules d'explosif, obtenues selon le procédé décrit dans la demande internationale PCT/EP2013/052478, ont de préférence une taille inférieure à 1000 nm, de manière préférée inférieure à 250 nm et de manière plus préférée inférieure à 100 nm.
De manière préférée, les particules d'explosif formant au moins une charge d'explosif possèdent une taille comprise entre 100nm et 1000nm.
De manière également préférée, les particules d'explosif ont une taille comprise entre 2 et 200 nm, avantageusement entre 2 et 100 nm et plus avantageusement entre 2 et 50 nm.

Les particules d'explosif comprennent de préférence au moins un composé explosif.
Le composé explosif est de préférence choisi parmi les nitramines, les esters nitriques, les nitroaromatiques et les organométalliques énergétiques.

De manière avantageuse, le composé explosif est choisi dans le groupe constitué par la cyclotriméthylènetrinitramine (RDX), le trinitrotoluène (TNT), l'hexanitrostylène (HNS), l'octogène (HMX), le triaminotrinitrobenzène (TATB), la pentrite (PETN), la nitrocellulose, l'hexanitrohexaazalsowurtzitane (CL20), le bis-5-nitrotetrazole tetramine cobalt perchlorate (BNCP) et l'un quelconque de leur mélange.
De manière particulièrement avantageuse, le composé explosif est un mélange de RDX et de TNT. Ce mélange est couramment appelé hexolite.

Les particules d'explosif peuvent comprendre en outre un composé non explosif.
De manière préférée, le composé non explosif est un composé dopant.
De manière avantageuse, le composé dopant est un composé organique.
De manière particulièrement avantageuse, le composé organique est la mélanine ou l'hexamine.
De manière également avantageuse, le composé dopant est un composé inorganique.
De manière particulièrement avantageuse, le composé inorganique est choisi parmi les précurseurs inorganiques, de préférence est choisi parmi les composés comprenant du bore, les composés comprenant du fer, les composés comprenant du nickel, les composés comprenant du chrome, les composés comprenant du zirconium, les composés comprenant du titane, les composés comprenant du silicium, les composés comprenant du tungstène, les composés comprenant du manganèse, les composés comprenant du vanadium, les composés comprenant du cuivre, les composés comprenant du zinc, les composés comprenant du molybdène, les composés comprenant du nobium et les composés comprenant du nitrium.

De manière préférée, la détonation d'au moins une charge d'explosif est réalisée en présence d'un milieu refroidissant.

De manière préférée, le milieu refroidissant est l'eau.

Le procédé de fabrication de nanoparticules comprend de préférence les étapes successives de :
- préparation d'une charge d'explosif formée par des particules d'explosif ;
- détonation de la charge d'explosif en présence d'un milieu refroidissant ;
- purification des nanoparticules.

Un autre aspect de l'invention fournit un procédé de fabrication de nanoparticules comprenant de préférence les étapes successives de
- mélange de particules d'explosif et d'au moins un composé non explosif ;
- préparation d'une charge d'explosif avec le mélange obtenu précédemment;
- détonation de la charge d'explosif en présence d'un milieu refroidissant ;
- purification des nanoparticules.

D'autres avantages et caractéristiques apparaîtront dans la description d'un mode particulier de réalisation de l'invention au regard des exemples et figures annexées parmi lesquelles :
- La figure 1 présente une photo d'une vue microscopique d'une charge d'explosif nanostructurée selon un premier mode de réalisation de l'invention.
- La figure 2 présente une photo de nanodiamants obtenus en utilisant une charge explosive microstructurée.
- La figure 3 présente une photo de nanodiamants obtenus en utilisant une charge explosive nanostructurée selon un second mode de réalisation de l'invention.
- La figure 4 présente un graphique représentant la distribution des tailles des nanoparticules de diamant en fonction des deux types de charges explosives utilisées en figure 3 et 4.

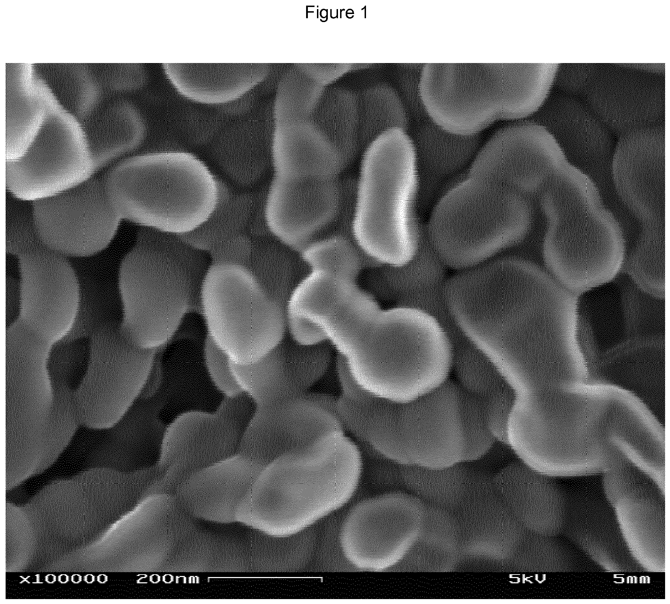

La figure 1 présente une photo d'une vue microscopique d'une charge explosive selon un premier mode de réalisation de l'invention. Les nanoparticules d'explosif possèdent une taille variant entre 100nm et 1000nm.

La charge explosive nanostructurée est réalisée à partir de particules d'explosif obtenues selon le procédé décrit dans la demande internationale PCT/EP2013/052478. Ces particules sont ensuite compactées suivant un procédé classique connu de l'homme du métier de la fabrication de charges d'explosif nanostructurées. Selon le premier mode de réalisation de l'invention, la charge d'explosif est une charge d'hexolite de 30 grammes.

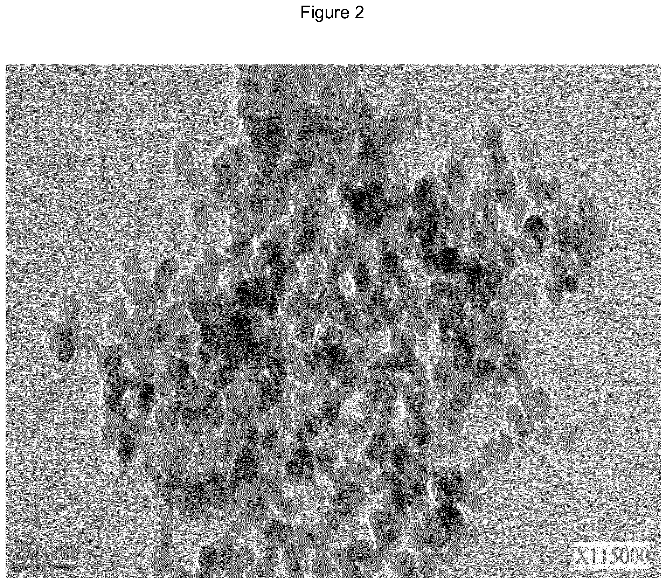

La figure 2 présente une photo de nanodiamants obtenus en utilisant une charge d'explosif microstructurée. Les nanodiamants sont des particules sphériques dont la taille moyenne de l'ensemble des particules approche les 7nm. La charge d'explosif utilisée pour fabriquer les nanodiamants est une charge d'hexolite microstructurée de 30g. Les particules explosives qui forment la charge d'explosif possèdent des tailles variant de 5 à 100µm.

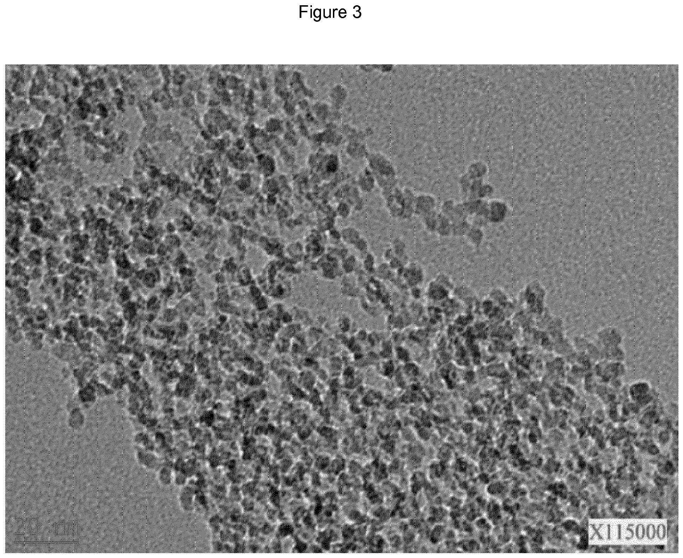

La figure 3 présente une photo de nanodiamants obtenus en utilisant une charge d'explosif nanostructurée. Les nanodiamants sont des particules sphériques dont la taille moyenne de l'ensemble des particules approche les 4nm. La charge d'explosif utilisée pour fabriquer les nanodiamants est une charge d'hexolite nanostructurée de 30g. Les particules explosives qui forment la charge possèdent des tailles variant de 100 à 200nm.

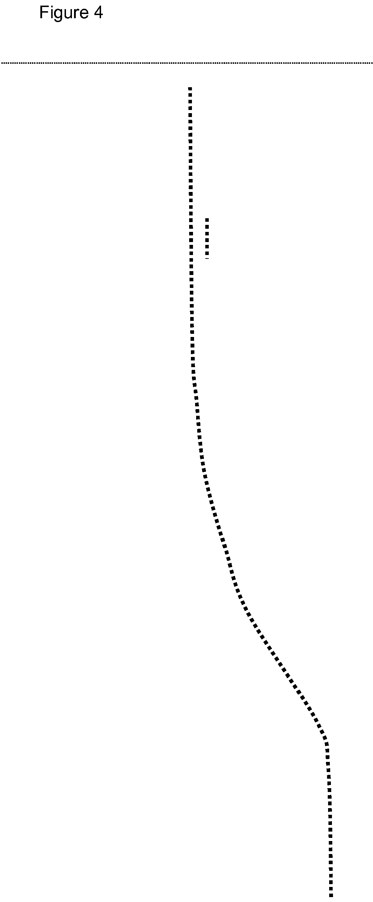

La figure 4 présente un graphique représentant la distribution des tailles des nanoparticules de diamant en fonction des deux types de charges d'explosif utilisées en figure 3 et 4. Les nanodiamants obtenus avec une charge d'explosif microstructurée possèdent des tailles variant de 3 à 12nm et dont plus de 50% des nanodiamants ont une taille supérieure à 5nm. Les nanodiamants obtenus avec une charge d'explosif nanostructurée possèdent des tailles variant de 1,5 à 7 nm, et près de 90% des nanodiamants ont une taille inférieure 5nm.

L'utilisation d'une charge d'explosif nanostructurée dans le procédé selon l'invention à la place d'une charge d'explosif microstructurée permet d'obtenir des nanoparticules de diamant dont la taille est inférieure à 5 nm avec un rendement d'environ 90%. Le procédé de fabrication selon l'invention possède également un intérêt économique car il permet d'abaisser fortement le taux de rébus des nanodiamants plus gros que 5nm.

De nombreuses modifications peuvent être apportées à l'exemple de réalisation de l'invention, par exemple :
- une charge d'explosif avec une composition chimique différente peut être utilisée ;
- les particules d'explosif peuvent êtres fabriquées par un autre procédé que la brumisation-évaporation flash ;
- la charge d'explosif peut être submicrostructurée, c'est-à-dire qu'elle est composée de particules d'explosif de tailles allant de 100nm à 1000nm.

La préparation de nanoparticules selon l'invention va maintenant être décrite pour un mode de réalisation particulier au moyen des exemples qui suivent.

### EXEMPLES

### Exemple 1 : Préparation d'une charge d'explosif formée par des particules RDX-TNT

### a) Préparation de particules RDX-TNT

1,2 g (60 % en poids) de RDX (cyclotriméthylènetrinitramine) et 0,8 g (40 % en poids) de TNT (trinitrotoluène) ont été dissous dans 500 mL d'acétone. La solution a été chauffée à 150°C sous une pression de 25 bars. Au moyen d'une buse à cône creux, la solution a été dispersée dans une chambre d'atomisation sous un angle d'atomisation de 60°. La pression dans la chambre d'atomisation était de 5 mbar. La séparation des particules a été effectuée au moyen de deux cyclones axiaux en parallèle. Après une heure, on obtient 0,75 g de particules RDX-TNT. La taille des particules RDX-TNT, telle qu'évaluée par microscopie à force atomique, est comprise entre 40 nm et 400 nm avec une taille moyenne de particules RDX-TNT d'environ 100 nm.

### b) Préparation d'une charge d'explosif

30g de particules RDX-TNT obtenue selon le procédé décrit à l'exemple 1.a) sont comprimées à température ambiante afin d'obtenir une charge d'explosif nanostructurée.

### Exemple 2 : Fabrication de nanoparticules de diamant

La charge d'explosif obtenue selon le procédé décrit à l'exemple 1.b) est placée dans une poche remplie d'eau suspendue au centre d'une cuve de détonation en acier. La détonation de la charge d'explosif est initiée par l'envoi d'une impulsion électrique provenant d'un détonateur. Les nanoparticules de diamant formées après détonation sont suspendues dans l'air et se déposent progressivement sur les parois de la cuve sous forme d'une suie de couleur noire. La suie de couleur noire est collectée, filtrée puis dissoute dans une solution d'acide . La solution ainsi obtenue est filtrée puis les nanoparticules de diamant sont collectées par un traitement d'oxydation sélectif.

Les nanoparticules de diamant obtenues ont une taille moyenne de 4,2 nm. La taille maximale des nanodiamants synthétisés est de 8 nm. 20% en masse des nanodiamants obtenus ont une taille inférieure à 3 nm.

### Exemple 3 comparatif : Fabrication de nanoparticules de diamant au moyen d'une charge d'explosif microstructurée

On a répété le procédé selon l'exemple 2, mais avec 30g d'une charge d'explosif microstructurée comprenant des particules RDX-TNT, ayant des tailles dans le domaine micrométrique.

Les nanodiamants obtenus ont une taille moyenne de 6,3 nm. La taille maximale des nanodiamants obtenus est de 23 nm. 4% en masse des nanodiamants ont une taille inférieure à 3 nm.

## Revendications

1. Procédé de fabrication de nanoparticules par détonation d'au moins une charge d'explosif, pour lequel ladite au moins une charge d'explosif est nanostructurée.

2. Procédé selon la revendication 1, pour lequel les nanoparticules ont une taille allant de 1 à 10 nm.

3. Procédé selon la revendication 1 ou 2, pour lequel les nanoparticules ont une taille inférieure à 5 nm.

4. Procédé selon les revendications 1 à 3, pour lequel la charge d'explosif est formée par des particules d'explosif.

5. Procédé selon les revendications 1 à 4, pour lequel les particules d'explosif ont une taille inférieure à 1000 nm.

6. Procédé selon les revendications 1 à 5, pour lequel les particules d'explosif ont une taille comprise entre 2 et 200 nm.

7. Procédé selon les revendications 1 à 6, pour lequel les particules d'explosif comprennent au moins un composé explosif.

8. Procédé selon les revendications 1 à 7, pour lequel les particules d'explosif comprennent en outre un composé non explosif.

9. Procédé selon la revendication 8, pour lequel le composé non explosif est un composé organique.

10. Procédé selon la revendication 8, pour lequel le composé non explosif est un composé inorganique.

11. Procédé selon les revendications 1 à 7, pour lequel le procédé comprend les étapes successives de :
- préparation d'une charge d'explosif formée par des particules d'explosif ;
- détonation de la charge d'explosif en présence d'un milieu refroidissant ;
- purification des nanoparticules.

12. Procédé selon les revendications 1 à 10, pour lequel le procédé comprend les étapes successives de :
- mélange des particules d'explosif et d'au moins un composé non explosif ;
- préparation d'une charge d'explosif avec le mélange obtenu précédemment;
- détonation de la charge d'explosif en présence d'un milieu refroidissant ;
- purification des nanoparticules.

13. Procédé selon les revendications 1 à 12, dans lequel les nanoparticules sont des nanoparticules de diamant.

14. Procédé selon les revendications 1 à 12, dans lequel les nanoparticules sont des nanoparticules d'oxyde de métal.

## Patentansprüche

1. Verfahren zur Herstellung von Nanopartikeln durch Detonation mindestens einer Sprengladung, bei dem die mindestens eine Sprengladung nanostrukturiert ist.

2. Verfahren nach Anspruch 1, bei dem die Nanopartikel eine Größe von 1 bis 10 nm aufweisen.

3. Verfahren nach Anspruch 1 oder 2, bei dem die Nanopartikel eine Größe kleiner als 5 nm aufweisen.

4. Verfahren nach den Ansprüchen 1 bis 3, bei dem die Sprengladung aus explosiven Partikeln gebildet ist.

5. Verfahren nach den Ansprüchen 1 bis 4, bei dem explosiven Partikel eine Größe kleiner als 1000 nm aufweisen.

6. Verfahren nach den Ansprüchen 1 bis 5, bei dem die explosiven Partikel eine Größe zwischen 2 und 200 nm aufweisen.

7. Verfahren nach den Ansprüchen 1 bis 6, bei dem die explosiven Partikel mindestens eine explosive Verbindung umfassen.

8. Verfahren nach den Ansprüchen 1 bis 7, bei dem die explosiven Partikel außerdem eine nicht explosive Verbindung umfassen.

9. Verfahren nach Anspruch 8, bei dem die nicht explosive Verbindung eine organische Verbindung ist.

10. Verfahren nach Anspruch 8, bei dem die nicht explosive Verbindung eine anorganische Verbindung ist.

11. Verfahren nach den Ansprüchen 1 bis 7, bei dem das Verfahren die folgenden Schritte umfasst:
- Herstellen einer Sprengladung, die aus explosiven Partikeln gebildet ist;
- Sprengen der Sprengladung in Anwesenheit eines Kühlmittels;
- Reinigen der Nanopartikel.

12. Verfahren nach den Ansprüchen 1 bis 10, bei dem das Verfahren die aufeinanderfolgenden Schritte umfasst:
- - Mischen der explosiven Partikel und mindestens einer nicht explosiven Verbindung;
- Herstellen einer Sprengladung mit der zuvor erhaltenen Mischung;
- Sprengen der Sprengladung in Anwesenheit eines Kühlmittels;
- Reinigen der Nanopartikel.

13. Verfahren nach den Ansprüchen 1 bis 12, bei dem die Nanopartikel Diamantnanopartikel sind.

14. Verfahren nach den Ansprüchen 1 bis 12, bei dem die Nanopartikel Metalloxid-Nanopartikel sind.

## Claims

1. A method for manufacturing nanoparticles by detonation of at least one explosive charge, for which said at least one explosive charge is nanostructured.

2. The method according to claim 1, for which the nanoparticles have a size ranging from 1 to 10 nm.

3. The method according to claim 1 or 2, for which the nanoparticles have a size of less than 5 nm.

4. The method according to claims 1 to 3, for which the explosive charge is formed by explosive particles.

5. The method according to claims 1 to 4, for which the explosive particles have a size of less than 1,000 nm.

6. The method according to claims 1 to 5, for which the explosive particles have a size comprised between 2 and 20 nm.

7. The method according to claims 1 to 6, for which the explosive particles comprise at least one explosive compound.

8. The method according to claims 1 to 7, for which the explosive particles further comprise a non-explosive compound.

9. The method according to claim 8, for which the non-explosive compound is an organic compound.

10. The method according to claim 8, for which the non-explosive compound is an inorganic compound.

11. The method according to claims 1 to 7, for which the method comprises successive steps of :
- preparing an explosive charge formed with explosive particles ;
- detonating the explosive charge in the presence of a cooling medium;
- purifying the nanoparticles.

12. The method according to claims 1 to 10, for which the method comprises the successive step of:
- mixing the explosive particles and at least one non-explosive compound
- preparing an explosive charge with the mixture obtained earlier;
- detonating the explosive charge in the presence of a cooling medium;
- purifying the nanoparticles.

13. The method according to claims 1 to 12, wherein the nanoparticles are diamond nanoparticles.

14. The method according to claims 1 to 12, wherein the nanoparticles are metal oxide nanoparticles.
